**Europäisches Patentamt**

**European Patent Office**

**Office européen des brevets**

(19)

(11) Veröffentlichungsnummer : **0 384 355 B1**

(12) ## EUROPÄISCHE PATENTSCHRIFT

(45) Veröffentlichungstag der Patentschrift :
**23.12.92 Patentblatt 92/52**

(51) Int. Cl.⁵ : **A22B 5/00, A22B 7/00**

(21) Anmeldenummer : **90103158.3**

(22) Anmeldetag : **19.02.90**

(54) **Vorrichtung zum Wegtransportieren von entnommenen inneren Schlachttierorganen.**

(30) Priorität : **20.02.89 DE 3905170**

(43) Veröffentlichungstag der Anmeldung :
**29.08.90 Patentblatt 90/35**

(45) Bekanntmachung des Hinweises auf die
Patenterteilung :
**23.12.92 Patentblatt 92/52**

(84) Benannte Vertragsstaaten :
**AT BE CH DE DK ES FR GB IT LI NL SE**

(56) Entgegenhaltungen :
**CA-A- 1 019 112**
**DE-B- 1 136 237**
**US-A- 1 531 060**
**US-A- 1 537 846**
**US-A- 4 090 275**

(73) Patentinhaber : **Banss Maschinenfabrik GmbH**
**& Co. KG**
**Industriestrasse 4**
**W-3560 Biedenkopf (DE)**

(72) Erfinder : **Runkel, Gerhard**
**Berliner Str. 13**
**W-6341 Angelburg-Gönnern (DE)**

(74) Vertreter : **Klunker . Schmitt-Nilson . Hirsch**
**Winzererstrasse 106**
**W-8000 München 40 (DE)**

## Beschreibung

Die Erfindung liegt auf dem Gebiet des Ausschlachtens von Schlachttieren, genauer gesagt der Ausrüstung des Arbeitsplatzes des Ausschlachters mit arbeitserleichternden Transport- bzw. Fördermitteln.

Konkret bezieht sich die Erfindung auf eine Vorrichtung zum Wegtransportieren von entnommenen inneren Schlachttierorganen, insbesondere Darmpaketen, mit:

(a) mindestens einem Arbeitsstand, der mit Abstandsraum vor einer Bewegungsbahn für auszuschlachtende Schlachttiere angeordnet ist,

(b) einer derart angeordneten und unterhalb des Niveaus des Arbeitsstands wegführenden Organe-Gleitbahn, daß entnommene Organe in dem Abstandsraum nach unten fallen und auf die Gleitbahn gelangen können; und

(c) einem abgestimmt auf die Bewegungsgeschwindigkeit der Schlachttiere bewegbaren Organetransporteur zur Aufnahme von entnommenen Organen, die die Gleitbahn passiert haben.

Eine Vorrichtung dieser Art ist bekannt (DE-AS 11 36 237). Bei dieser Vorrichtung kann der Ausschlachter ein einem Schlachtrind entnommenes Darmpaket, ohne sich umzudrehen, zwischen sich und dem Schlachtrind nach unten in den trichterartigen Mund eines Schachtes fallen lassen. Der Schachtmund liegt oberhalb des Niveaus des Arbeitsstands des Ausschlachters, und der Schacht führt, in die Horizontale abbiegend und teilweise unter dem Arbeitsstand verlaufend, zu einem Tisch, wo der Darm entleert wird. Anschließend wird der entleerte Darm von Hand auf den angetrieben bewegbaren Organetransporteur gelegt.

Bei der bekannten Vorrichtung passieren die Darmpakete der nacheinander ausgeschlachteten Schlachtrindern den gleichen Schacht. Es ist daher möglich, daß Keime von keimbehafteten Därmen auf andere Därme übertragen werden.

Der Erfindung liegt die Aufgabe zugrunde, eine gattungsgemäße Vorrichtung mit verbesserten Hygienebedingungen zu schaffen.

Zur Lösung dieser Aufgabe ist die erfindungsgemäße Vorrichtung dadurch gekennzeichnet,

(d) daß als Gleitbahn ein unterhalb des Arbeitsstands längs der Bewegungsbahn verlaufendes, abgestimmt auf die Bewegungsgeschwindigkeit der Schlachttiere antreibbares, endloses Entnahmeband vorgesehen ist, dessen Oberseite einen näher an die Bewegungsbahn als der Arbeitsstand heranreichenden ersten Rand und einen gegenüberliegenden zweiten Rand aufweist und in Richtung vom ersten Rand zum zweiten Rand abfällt, so daß entnommene Organe auf dem Entnahmeband quer abwärts rutschen können;

(e) daß der Organetransporteur längs des zweiten Rands des Entnahmebands verläuft und abgestimmt auf die Bewegungsgeschwindigkeit der Schlachttiere sowie die Bewegungsgeschwindigkeit des Entnahmebands angetrieben bewegbar ist, so daß entnommene Organe von dem Entnahmeband auf den Organetransporteur gelangen können; und

(f) daß dem Entnahmeband an einer Stelle, an der die entnommenen Organe das Entnahmeband verlassen haben, eine Einrichtung zum Waschen und/oder Desinfizieren des Entnahmebands zugeordnet ist.

Bei der erfindungsgemäßen Vorrichtung hängen die Schlachttiere meistens mit dem Kopf nach unten an einer Hängebahn und werden wärhrend des Ausschlachtens oder vor und nach dem Ausschlachten längs der Hängebahn weiterbewegt, wie es auch bei der beschriebenen bekannten Vorrichtung der Fall ist. Der Ausschlachter kann das jeweils entnommene Organ einfach im Abstandsraum durch den "Schlitz" zwischen seinem Standplatz und dem betreffenden Schlachttier (Schlachttierbewegungsbahn) auf das Entnahmeband fallen lassen. Dort rutscht das betreffende Organ quer abwärts und gelangt auf den Organetransporteur. Durch die aufeinander abgestimmten Bewegungen der Schlachttiere längs deren Bewegungsbahn, des Entnahmebands und des Organetransporteurs ist sichergestellt, daß für jedes Schlachttier ein eigener, unbelegter Bereich des Entnahmebands und des Organetransporteurs zur Verfügung steht. Unter Einhaltung dieser Bedingung ist es möglich, daß die Bewegungsgeschwindigkeiten der Schlachttiere, des Entnahmebands und des Organetransporteurs unterschiedlich oder synchron sind. Auch nachträglich ist die Zuordnung jedes entnommenen Organs auf dem Organetransporteur zu demjenigen Schlachttier, aus dem es entnommen worden ist, feststellbar. Wenn beispielsweise bei der tierärztlichen Begutachtung eines Schlachttiers an einer Stelle des Schlachthofs hinter der Ausschlachtstelle ein Schlachttier als bedenklich oder für die menschliche Ernährung ungeeignet eingestuft wird, können die zu diesem Schlachttier gehörenden inneren Organe ebenfalls aussortiert werden. Der Ausschlachter muß keine mühsamen Rumpfdrehungen ausführen, sondern kann dauernd mit dem Gesicht zu den Schlachttieren arbeiten. Mühevolles Heben und Weiterreichen der entnommenen Organe entfällt. Da das Entnahmeband laufend gereinigt und/oder desinfiziert bzw. sterilisiert wird, ehe es nach einem vollen Umlauf wieder neu mit Organen beschickt wird, ist auf dem Entnahmeband eine Keimübertragung von Organen eines Schlachttiers auf Organe eines anderen Schlachttiers praktisch ausgeschlossen.

Die erfindungsgemäße Vorrichtung eignet sich prinzipiell für alle Arten von Schlachttieren. Sie eignet sich ganz besonders für Schweine, aber auch für Schafe, Ziegen und dgl., ja sogar für große Schlachttiere wie Rinder. Die erfindungsgemäße Vorrichtung eignet sich prinzipiell für alle Organarten. Sie ist jedoch ganz besonders geeignet beim Entnehmen von Gedärmen, aber auch beim Entnehmen von anderen Bauchorganen, wie Leber, Niere, Magen, Milz und dgl.

Besonders günstig und einfach kann man das Reinigen des Entnahmebands durch auf das Entnahmeband gerichtete Wasserstrahlen bewirken. Für das Sterilisieren eignet sich insbesondere das Richten von Heißwasserstrahlen gegen das Entnahmeband. Weitere Möglichkeiten sind das Aufbringen einer Flüssigkeit mit sterilisierend wirkenden Zusätzen oder das Erhitzen auf genügend hohe Temperatur mittels anderer Einrichtungen, beispielsweise Infrarotstrahler oder dgl.

Das Entnahmeband ist vorzugsweise als Gummiband, Stahlband oder Plattenband ausgebildet, wobei die Platten des Plattenbandes insbesondere aus Metall oder Kunststoff bestehen können.

Vorzugsweise weist das Entnahmeband auf seiner Oberseite quer verlaufende Leisten auf. Durch diese Leisten soll sichergestellt werden, daß die entnommenen Organe längs definierter Querbahnen auf dem Entnahmeband zum Organetransporteur rutschen. Es ist günstig, wenn diese Leisten paarweise an dem zweiten Rand einen geringeren Abstand voneinander haben als an dem ersten Rand, so daß für das Auftreffen der Organe auf dem Entnahmeband ein breiter Bereich vorhanden ist, aber die Organe in einem definierten, jeweils schmaleren Bereich an den Organetransporteur abgegeben werden.

Man kann den Arbeitsstand auf der Tragstruktur des Entnahmebands abstützen, so daß für den Arbeitsstand nicht gesonderte Stützen an dem Entnahmeband vorbei zum Schlachthofboden geführt werden müssen. Alternativ ist es aber beispielsweise auch möglich, den Arbeitsstand hängend abzustützen.

Man kann den Organetransporteur so ausbilden, daß er eine Reihe beabstandeter Organschalen aufweist. Zur erforderlichen Weiterbewegung des Organetransporteurs eignet sich ganz besonders eine Ausbildung, bei der die Organschalen an einer Hängebahn hängen und mittels einer der Hängebahn zugeordneten Förderkette bewegbar sind.

Die erfindungsgemäße Vorrichtung eignet sich ganz besonders dazu, längs der Bewegungsbahn der Schlachttiere eine Reihe beabstandeter Arbeitsstände vorzusehen. Die Anzahl der Arbeitsstände richtet sich nach der Schlachtleistung der betreffenden Schlachtstraße, so daß am Ende der Reihe der Arbeitsstände zuverlässig sämtliche, längs der Bewegungsbahn bewegten Schlachttiere ausgeschlachtet sind.

Die Erfindung und Ausgestaltungen der Erfindung werden im folgenden anhand eines zeichnerisch dargestellten Ausführungsbeispiels noch näher erläutert. Es zeigt:

Fig. 1 einen Querschnitt einer Vorrichtung zum Wegtransportieren von entnommenen Schlachttierorganen;

Fig. 2 eine Draufsicht auf die Vorrichtung von Fig. 1.

Das gezeichnete Ausführungsbeispiel bezieht sich auf eine Schlachtstraße für Schweine und betrifft als Beispiel das Wegtransportieren von entnommenen Darmpaketen.

Abgestochene und ausgeblutete Schweine 2 sind an den Hinterbeinen mittels Haken 4 aufgehängt, die auf einer Rohrbahn 6 verschiebbar sind. Zum kontinuierlichen Fördern der Haken 4 ist oberhalb der Rohrbahn 6 ein nicht eingezeichneter Kettenförderer vorgesehen. Derjenige Raum, den die Schweine 2 bei ihrer Bewegung längs der Rohrbahn 6 durchlaufen, stellt die Bewegungsbahn 8 der Schweine 2 dar.

Auf der Bauchseite der Schweine 2 sind, längs der Bewegungsbahn 8 mit Abstand verteilt, vier Arbeitsstände 10 vorgesehen, wobei an jedem Arbeitsstand 10 ein Schlachter 12 arbeiten kann. Die vier Arbeitsstände 10 sind auf einer gemeinsamen, brückenartigen Plattform 14 vorgesehen. Mindestens an der den Schweinen 2 abgewandten Rückseite und den in Schweinebewegungsrichtung vorderen und hinteren Enden der Plattform 14 sind Gitter oder Geländer 13 zum Sichern der Schlachter 12 vorgesehen. Auch an der den Schweinen 2 zugewandten Vorderseite könnte ein niedrigeres Gitter oder Geländer vorgesehen sein.

Zwischen der den Schweinen 2 zugewandten Vorderkante der Plattform 14 und der Bewegungsbahn 8 bzw. den Schweinebauchseiten befindet sich ein Abstandsraum 16.

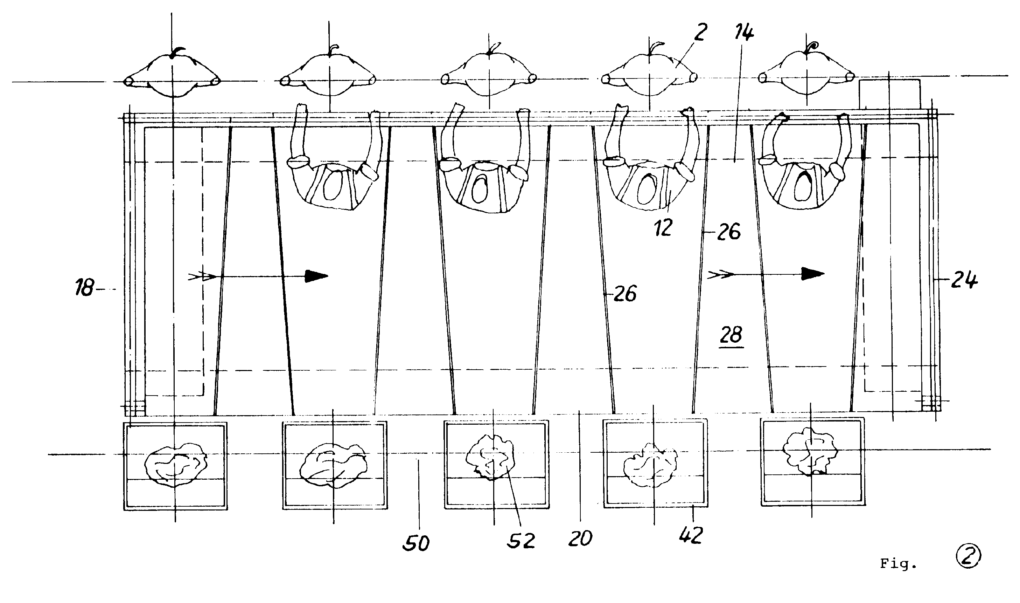

Unterhalb der Plattform 14 ist ein Entnahmeband 18 vorgesehen. Dieses besteht im wesentlichen aus einem schräggestellten, endlosen Gummiband 20, einem elektrischen Antrieb 22 hierfür und einer rahmenartigen Tragstruktur 24 aus Stahlrohren. Der Antriebsmotor wirkt über eine Kette auf eine der Umlenktrommeln des Gummibands 20. Zwischen den beiden End-Umlenktrommeln sind noch mehrere Zwischen-Stütztrommeln für das Gummiband 20 vorgesehen. In Fig. 2 ist erkennbar, daß die brückenartige Plattform 14 in Bewegungsrichtung der Schweine 2 vorn und hinten auf dem dortigen Teil der Tragstruktur 24 des Entnahmebands 18 abgestützt ist.

Das Gummiband 20 weist auf seiner Außenseite Leisten 26 auf, die wenige Zentimeter von der Gummibandebene fortragen. Das obere Trum bzw. die Oberseite des Bandes 20 ist mit 28 bezeichnet, das untere Trum bzw. die Unterseite mit 30. Der erste Rand 32 bzw. die erste Kante der Oberseite 28 des Bandes 20 befindet sich, grob gesprochen, unterhalb der Schweine 2. Der zweite Rand 34 bzw. die zweite Kante der Oberseite 28 des Bandes 20 befindet sich etwas weiter von den Schweinen 2 entfernt als die Rückseite der Plattform 14. Die Achsen 36 der Umlenktrommeln und der Stütztrommeln befinden sich in einer geneigten Ebene derart, daß die Oberseitenebene des Bandes 20 vom Bereich unterhalb der Schweine 2 zum Bereich rückseitig von der Plattform 14 abfällt. Konkret gesprochen reicht der erste Rand 32 des Bandes 20 näher an die Schweine 2 heran als die Vorderseite der Plattform 14, so daß vorzugsweise der gesamte Abstandsraum 16 unten durch das Entnahmeband 18 überdeckt wird.

Entlang des zweiten Rands 34 des Bandes 20 und somit parallel zur Rohrbahn 6 erstreckt sich eine Hängebahn 38. An der Hängebahn 38 hängen mittels Stangen 40 und in Förderrichtung beabstandet Organschalen 42. Die Stangen 40 und dasmit die Organschalen 42 werden durch einen der Hängebahn 38 zugeordneten Kettenförderer gefördert. Mit Gleitstücken oder Rollkörpern 44 stützen sich die Organschalen 42 beidseitig an Führungen 46 ab, damit sie nicht wesentlich pendeln.

Aus Fig. 2 ist erkennbar, daß die Leisten 26 paarweise am zweiten Rand 34 des Bandes 20 einen geringeren Abstand - gemessen in Bewegungsrichtung des Bandes 20 - voneinander haben als am ersten Rand 32.

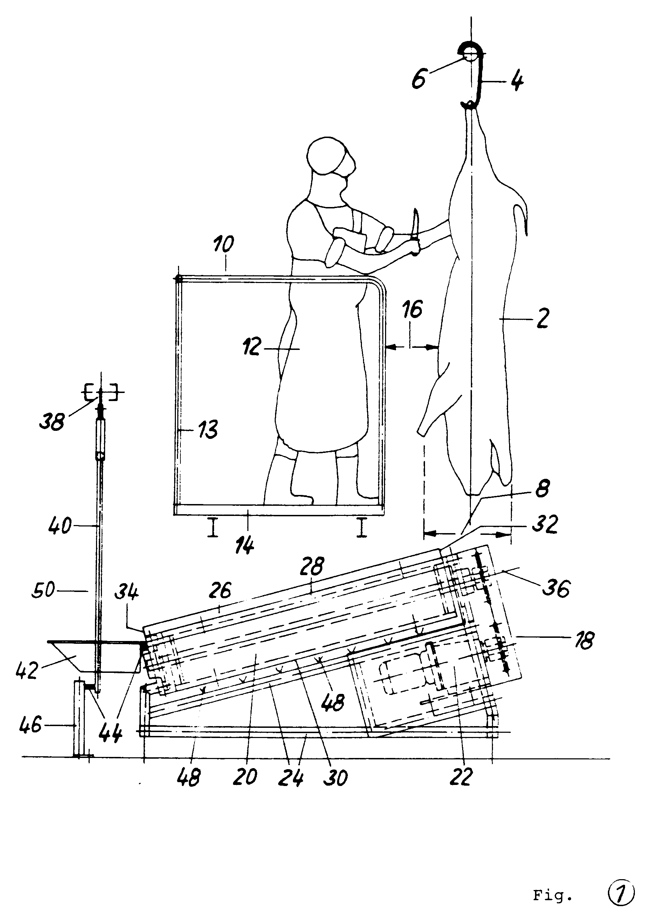

In Fig. 1 sind außerdem Sprühdüsen 48 eingezeichnet, die gegen die Unterseite des Untertrums 30 des Bandes 20 gerichtet sind. Durch die Sprühdüsen 48 wird heißes Wasser mit einer Temperatur von mehr als 80 °C gegen die Unterseite 30 des Bandes 20 gesprüht, um das Band 20 fortlaufend zu waschen und zu desinfizieren bzw. sterilisieren. Man kann, in Bewegungsrichtung des Bandes 20 beabstandet, auch mehrere Reihen von Sprühdüsen 48 vorsehen, beispielsweise eine erste Reihe zum Ansprühen mit kaltem Wasser rein zum Reinigen und eine zweite Reihe zum Ansprühen mit heißem Wasser.

Die Bewegungsgeschwindigkeiten der Schweine 2 längs der Rohrbahn 6, des Bandes 20 und des aus der Reihe der Organschalen 42 und dessen Antrieb gebildeten Organetransporteurs 50 sind gleich, so daß sich eine synchrone Bewegung der Schweine 2, des Entnahmebands 18 und des Organetransporteurs 50 ergibt. Es wird jedoch darauf hingewiesen, daß die Bewegungsgeschwindigkeit des Entnahmebands 18 und des Organetransporteurs 50 von der Bewegungsgeschwindigkeit der Schweine 2 verschieden, beispielsweise größer sein kann, insbesondere wenn nur ein Arbeitsstand 10 vorgesehen ist.

Der Schlachter 12 kann aus dem bauchseitig geöffneten Schweinekörper 2 beispielsweise ein Darmpaket 52 entnehmen und einfach nach unten im Abstandsraum 16 fallen lassen. Das Darmpaket 52 gelangt so auf die Oberseite 28 des Entnahmebands 18 und rutscht wegen dessen Schrägstellung auf der Oberseite 28 quer zur Bewegungsrichtung des Bandes 20 schräg nach unten während das Band 20 in seiner Bewegungsrichtung weiterläuft. Am zweiten Rand 34 des Bandes 20 rutscht das Darmpaket 52 in eine dortige Entnahmeschale 42 des Organetransporteurs 50, wobei der obere Rand der Organschale 42 etwas niedriger als der der zweite Rand 34 ist. Der Organetransporteur 50 und das Entnahmeband 18 sind so synchronisiert, daß sich jeweils eine Organschale 42 in dem Bereich befindet, wo zwei Leisten 26 enger beieinander sind. Somit rutschen die Darmpakete 52 quer zur Bewegungsrichtung des Bandes 20 geführt durch ein Paar von Leisten 26 jeweils auf eine Organschale 42 zu, wobei zwischen dem ersten Rand 32 und dem zweiten Rand 34 ein Trichtereffekt zwischen den paarweise aufeinander zu laufenden Leisten 26 besteht.

Der Organetransporteur 50 verläuft weiter über das vordere Ende des Entnahmebands 18 hinaus zu einer Stelle, wo die Darmpakete 52 weiter verarbeitet werden. Dabei befinden sich die einzelnen Darmpakete 52 in den einzelnen Organschalen 42 streng in der gleichen Reihenfolge wie die einzelnen Schweine 2 an der Rohrbahn 6, so daß auch in Entfernung von der beschriebenen Vorrichtung noch Darmpakete 52 von Schweinen 2 ausgesondert werden können, die als nicht für die menschliche Ernährung geeignet eingestuft worden sind.

## Patentansprüche

1. Vorrichtung zum Wegtransportieren von entnommenen inneren Schlachttierorganen (52), insbesondere Darmpaketen, mit:

    (a) mindestens einem Arbeitsstand (10), der mit Abstandsraum (16) vor einer Bewegungsbahn (8) für auszuschlachtende Schlachttiere (2) angeordnet ist;

    (b) einer derart angeordneten und unterhalb des Niveaus des Arbeitsstands (10) wegführenden Organe-Gleitbahn, daß entnommene Organe (52) in dem Abstandsraum (16) nach unten fallen und auf die Gleitbahn gelangen können; und

    (c) einem abgestimmt auf die Bewegungsgeschwindigkeit der Schlachttiere (2) bewegbaren Organetransporteur (50) zur Aufnahme von entnommenen Organen (52), die die Gleitbahn passiert haben,

    dadurch gekennzeichnet,

    (d) daß als Gleitbahn ein unterhalb des Arbeitsstands (10) längs der Bewegungsbahn (8) verlaufendes, abgestimmt auf die Bewegungsgeschwindigkeit der Schlachttiere (2) antreibbares, endloses Entnahmeband (18) vorgesehen ist, dessen Oberseite (28) einen näher an die Bewegungsbahn (8) als der Arbeitsstand (10) heranreichenden ersten Rand (32) und einen gegenüberliegenden zweiten Rand (34) aufweist und in Richtung vom ersten Rand (32) zum zweiten Rand (34) abfällt, so daß entnommene Organe (52) auf dem Entnahmeband (18) quer abwärts rutschen können;

(e) daß der Organetransporteur (50) längs des zweiten Rands (34) des Enthahmebands (18) verläuft und abgestimmt auf die Bewegungsgeschwindigkeit der Schlachttiere (2) sowie die Bewegungsgeschwindigkeit des Entnahmebands (18) angetrieben bewegbar ist, so daß entnommene Organe (52) von dem Entnahmeband (18) auf den Organetransporteur (50) gelangen können; und

(f) daß dem Entnahmeband (18) an einer Stelle, an der die entnommenen Organe (52) das Entnahmeband (18) verlassen haben, eine Einrichtung (48) zum Waschen und/oder Desinfizieren des Entnahmebands (18) zugeordnet ist.

2. Vorrichtung nach Anspruch 1,
dadurch gekennzeichnet,
daß die Einrichtung (48) eine Einrichtung zum Aufbringen von Waschwasser, Heißwasser, Sterilisierungsflüssigkeit und/oder zum Erhitzen des Entnahmebands (18) ist.

3. Vorrichtung nach Anspruch 1 oder 2,
dadurch gekennzeichnet,
daß das Entnahmeband (18) ein Gummiband, ein Stahlband oder ein Plattenband ist.

4. Vorrichtung nach einem der Ansprüche 1 bis 3,
dadurch gekennzeichnet,
daß das Entnahmeband (18) auf seiner Oberseite quer verlaufende Leisten (26) aufweist.

5. Vorrichtung nach Anspruch 4,
dadurch gekennzeichnet,
daß die Leisten (26) paarweise an dem zweiten Rand (34) einen geringeren Abstand voneinander haben als an dem ersten Rand (32).

6. Vorrichtung nach einem der Ansprüche 1 bis 5,
dadurch gekennzeichnet,
daß der Arbeitsstand (10) auf der Tragstruktur (24) des Entnahmebands (18) abgestützt ist.

7. Vorrichtung nach einem der Ansprüche 1 bis 6 ,
dadurch gekennzeichnet,
daß der Organetransporteur (50) eine Reihe beabstandeter Organschalen (42) aufweist.

8. Vorrichtung nach Anspruch 7,
dadurch gekennzeichnet,
daß die Organschalen (42) an einer Hängebahn (38) hängen und mittels einer der Hängebahn (38) zugeordneten Förderkette bewegbar sind.

9. Vorrichtung nach einem der Ansprüche 1 bis 8 ,
dadurch gekennzeichnet,
daß eine Reihe von längs der Bewegungsbahn (8) beabstandeten Arbeitsständen (10) vorgesehen ist.

Claims

1. A device for carrying off entrails (52), in particular sets of intestines, of slaughtered animals, comprising:

(a) at least one working stand (10) disposed with a distance space (16) in front of a path (8) of movement for slaughtered animals (2) to be disemboweled;

(b) an entrails slide disposed and leading away underneath the level of the working stand (10) in such a manner that entrails (52) taken out can fall down in said distance space (16) so as to drop onto said slide; and

(c) an entrails conveyor (50) serving to receive taken out entrails (52) that have passed said slide and being movable in harmonization with the speed of movement of the slaughtered animals (2),

characterized in

(d) that said slide is constituted by an endless discharge belt (18) which extends underneath the working stand (10) along said path (8) of movement and is adapted to be driven in harmonization with the speed of movement of the slaughtered animals (2) and the top side (28) of which has a first edge (32) extending closer to said path (8) of movement than said working stand (10) and an opposite second edge (34) and is inclined downwardly from the first edge (32) towards the second edge (34) so that taken out entrails (52) can slide on said discharge belt (18) transversely downwardly;

(e) that said entrails conveyor (50) extends along the second edge (34) of said discharge belt (18) and is drivably movable in harmonization with the speed of movement of the slaughtered animals (2) and the speed of movement of the discharge belt (18) so that taken out entrails (52) can be passed from the discharge belt (18) onto the entrails conveyor (50); and

(f) that said discharge belt (18), at a location where the taken out entrails (52) have left the discharge belt (18), has a means (48) associated therewith for washing and/or disinfecting the discharge belt (18).

2. A device according to claim 1,

characterized in that said means (48) is a means for applying washing water, hot water, sterilization liquid and/or for heating the discharge belt (18).

3. A device according to claim 1 or 2, characterized in that said discharge belt (18) is a rubber belt, a steel belt or a plate belt.

4. A device according to any one of claims 1 to 3, characterized in that said discharge belt (18) has transversely extending ridges (26) on its top side.

5. A device according to claim 4, characterized in that said ridges (26) in pairs are spaced apart at said second edge (34) by a smaller distance than at said first edge (32).

6. A device according to any one of claims 1 to 5, characterized in that said working stand (10) is supported on the supporting structure (24) of said discharge belt (18).

7. A device according to any one of claims 1 to 6, characterized in that the entrails conveyor (50) comprises a series of spaced entrails trays (42).

8. A device according to claim 7, characterized in that said entrails trays (42) are suspended on a suspension conveyor (38) and are movable by means of a conveyor chain associated with said suspension conveyor (38).

9. A device according to any one of claims 1 to 8, characterized in that a series of working stands (10) is provided in spaced apart manner along the path (8) of movement.

## Revendications

1. Dispositif pour le transport des entrailles d'animaux abattus (52), en particulier des paquets d'intestins, avec :
(a) au moins un poste de travail (10), disposé à une distance de garde (16) d'une trajectoire de déplacement (8) pour les animaux abattus (2) à éviscérer;
(b) une piste de glissement d'organes, disposée à un niveau inférieur et s'éloignant au-dessous du niveau du poste de travail (10), de telle façon que les organes (52) prélevés puissent tomber vers le bas dans la distance de garde (16) et arriver sur la piste de glissement; et
(c) un transporteur d'organes (50), susceptible de se déplacer à la vitesse de déplacement des animaux abattus (2), en vue de recevoir des organes prélevés (52), ayant passé la piste de glissement,
caractérisé
(d) en ce qu'est prévu, à titre de piste de glissement, une bande de prélèvement continue (18), s'étendant au-dessous du poste de travail (10), le long de la piste de déplacement (8), susceptible d'être entraînée de façon adaptée à la vitesse de déplacement des animaux abattus (2), dont la face supérieure (28) présente une première bordure (32), arrivant plus près de la trajectoire de déplacement (8) que le poste de travail (10), et une deuxième bordure (34), située à l'opposé et descendant en direction de la première bordure (32) à la deuxième bordure (34), de sorte que les organes prélevés (52) puissent glisser sur la bande de prélèvement (18), transversalement vers le bas;
(e) en ce que le transporteur d'organes (50) s'étend le long de la deuxième bordure (34) de la bande de prélèvement (18) et est susceptible d'être déplacé, de façon adaptée à la vitesse de déplacement des animaux abattus (2), ainsi qu'à la vitesse de déplacement de la bande de prélèvement (18), de sorte que les organes prélevés (52) peuvent arriver de la bande de prélèvement (18) au transporteur à organes (50); et
(f) en ce qu'un dispositif (48), destiné au lavage et/ou à la désinfection de la bande de prélèvement (18), est associé à la bande de prélèvement (18), en un endroit auquel les organes prélevés (52) ont quitté la bande de prélèvement (18).

2. Dispositif selon la revendication 1, caractérisé en ce que le dispositif (48) est un dispositif d'application d'eau de lavage, d'eau chaude, de liquide de stérilisation et/ou destiné à chauffer la bande de prélèvement (18).

3. Dispositif selon la revendication 1 ou 2, caractérisé en ce que la bande de prélèvement (18) est une bande en caoutchouc, une bande en acier ou une bande composées de plaques.

4. Dispositif selon l'une des revendications 1 à 3, caractérisé en ce que la bande de prélèvement (18) présente en face supérieure des bandes (26) qui s'étendent transversalement.

5. Dispositif selon la revendication 4, caractérisé en ce que les bandes (26) présentent, par couples, sur la deuxième bordure (34), un espacement moindre entre elles que sur la première bordure (32).

6. Dispositif selon l'une des revendications 2 ou 3, caractérisé en ce que le poste de travail (10) est soutenus sur la structure porteuse (24) de la bande de prélèvement (18).

7. Dispositif selon l'une des revendications 1 à 6, caractérisé en ce que le transporteur d'organes (50) présente une série d'auges à organes (42) espacées.

8. Dispositif selon la revendication 7, caractérisé en ce que les auges à organes (42) pendent à une bande d'accrochage (38) et sont déplaçables au moyen d'une chaîne de transport associée à la bande d'accrochage (38).

9. Dispositif selon l'une des revendications 1 à 8, caractérisé en ce qu'est prévue une série de postes de travail (10), espacés le long de la trajectoire de déplacement (8).

Fig. ①

Fig. 2